# EUROPEAN PATENT SPECIFICATION

(11) **EP 2 653 881 B1**
(45) Date of publication and mention of the grant of the patent: **13.06.2018**
(21) Application number: 12164887.7
(22) Date of filing: 20.04.2012
(51) Int. Cl.: G01S 5/00, G01S 5/02

(54) **Cooperative localization of portable electronic devices**
Kooperative Lokalisierung von tragbaren elektronischen Vorrichtungen
Localisation coopérative de dispositifs électroniques portables

(43) Date of publication of application: 23.10.2013
(73) Proprietor: BlackBerry Limited, Waterloo, ON N2K 0A7 (CA)
(72) Inventor: Oka, Anand Ravindra, Waterloo, Ontario N2L 3W8 (CA); Oliver, Robert George, Waterloo, Ontario N2L 3W8 (CA); Snow, Christopher Harris, Waterloo, Ontario N2L 3W8 (CA)
(74) Representative: Hanna Moore + Curley

(56) References cited:
- EP-A1- 1 788 357
- US-A1- 2003 220 116
- US-A1- 2008 248 813
- GUENTHER RETSCHER ET AL: "Integration of RFID, GNSS and DR for Ubiquitous Positioning in Pedestrian Navigation", JOURNAL OF GLOBAL POSITIONING SYSTEMS,, vol. 6, no. 1, 1 January 2007 (2007-01-01) , pages 56-64, XP007919630, [retrieved on 2007-01-01]

## Description

### TECHNICAL FIELD

The current description relates to an apparatus, system and methods of determining a location of a portable electronic device, and in particular to determining a position of a portable electronic device using cooperative localization.

### BACKGROUND

Location based services require a good knowledge of the geographical position of users, outdoors as well as indoors. A user's geographical position may be determined using a Global Positioning System (GPS), or more broadly Global Navigation Satellite System (GNSS), receiver of the user's portable electronic device. Outdoors, and in areas of good GPS signal reception, the location can typically be obtained, potentially with an accuracy of approximately 5 to 10 meters.

Positioning services are often unavailable indoors, or in areas of poor GNSS signal reception. In such cases the user has to be localized via other systems such as assisted GPS systems that use cellular or Wi-Fi radio signal strength indicator (RSSI) measurements to provide positioning information, Wi-Fi signature analysis or radio frequency beacon system. Although these additional techniques may be helpful to provide additional location information, they typically do not provide highly accurate estimate of the location and require defined configuration.

It is desirable to provide a location technique that can provide an estimate of a location of a portable electronic device using cooperative localization techniques.
US Patent Publication No: US 2008/0248813 A1 discloses various embodiments for obtaining a coarse location for a mobile device. In one embodiment, a mobile device may comprise one or more interfaces for detecting location reference nodes in view of the mobile device and a client module to send a location query to a location database. The location query may comprise node data identifying the reference nodes in view of the mobile device. The location database may be configured to respond to the location query with positioning information for providing an estimated position of the mobile device. The positioning information may be based on correlated position data and node data received from one or more client devices having Global Positioning System (GPS) position determination capability and configured to report position data and node data for location reference nodes in view.

US Patent Publication No: US 2003/0220116 A1 discloses a method and apparatus for determining the position of a portable device in a wireless network formed by a plurality of base stations. An apparatus for determining a location of a wireless device in a wireless communication network provided by a plurality of base stations is disclosed. The apparatus comprises a signal strength table and a positioning service module. The signal strength table characterizes signal strengths relative to each of plurality base stations at each of a plurality of locations in the wireless communication network. The positioning service module correlates an actual received signal strength for a communication with the wireless device with at least one of the received signal strengths in the signal strength table, to determine the position of the wireless device. Alternate means and methods are also disclosed for determining the position of the portable device.

EP1788357 A1 and XP007919630 GUENTHER RETSCHER ET AL: "Integration of RFID, GNSS and DR for Ubiquitous Positioning in Pedestrian Navigation", JOURNAL OF GLOBAL POSITIONING SYSTEMS,, vol. 6, no. 1, 1 January 2007 (2007-01-01), pages 56-64, disclose GPS, INS and RFID providing position information. GPS is used outside. Indoor positioning based on INS movement based measurements since last known position. RFID provides reliable indoor reference positon used to recalibrate INS based positioning.

### SUMMARY

In accordance with an aspect of the present disclosure there is provided a method of cooperative localization of a portable electronic device according to claim 1.

In accordance with another aspect of the present disclosure there is provided a computing device for estimating a location of a portable electronic device according to claim

In accordance with yet another aspect of the present disclosure there is provided a computer readable memory containing instructions for cooperative localization of a portable electronic device according to claim 17.

### BRIEF DESCRIPTION OF THE DRAWINGS

Further features and advantages of the present disclosure will become apparent from the following detailed description, taken in combination with the appended drawings, in which:
Figure 1 depicts an illustrative environment in which the cooperative localization can be used;
Figure 2 depicts an illustrative technique of determining a location of a portable electronic device based on a location of adjacent portable electronic devices;
Figure 3 depicts an illustrative environment in which the cooperative localization can be used;
Figure 4 depicts an illustrative embodiment of extending location information inside of an indoor location;
Figure 5 depicts the embodiment of Figure 4 when a further user enters the indoor space;
Figure 6 depicts an environment for determining cooperative location estimates of portable electronic devices;
Figure 7 depicts a process of estimating a location of a portable electronic device;
Figure 8 depicts a process of estimating a location of a portable electronic device;
Figure 9 show a block diagram of a portable electronic device in accordance with an illustrative embodiment;
Figure 10 depicts a method of estimating a location at a portable electronic device using received short-range signals;
Figure 11 depicts components of a cooperative localization server; and
Figure 12 depicts a method of cooperative localization at a cooperative localization server.

### DETAILED DESCRIPTION

Location based services require that the position of a user be known. The position of a user or device may be determined in various ways, such as through GPS or other means. Current location determination techniques typically do not work well indoors as they require the reception of GPS signals, or signals from wireless transmitters such as cell tower transmitters, which may not penetrate indoors well. As described further herein, it is possible to determine an estimate of a user's location based on received short-range communication radio signals transmitted from other portable electronic devices. The short-range communication radios are considered herein to be Bluetooth™ radios although other short-range communication radios are possible such as ZigBee™. The communications may utilize a peer-to-peer communication technologies or Wireless Personal Area Network (WPAN) standards. The location technique described further herein determines a location estimate for a portable electronic device based on locations associated with Bluetooth radios that are in communication range of the portable electronic device.

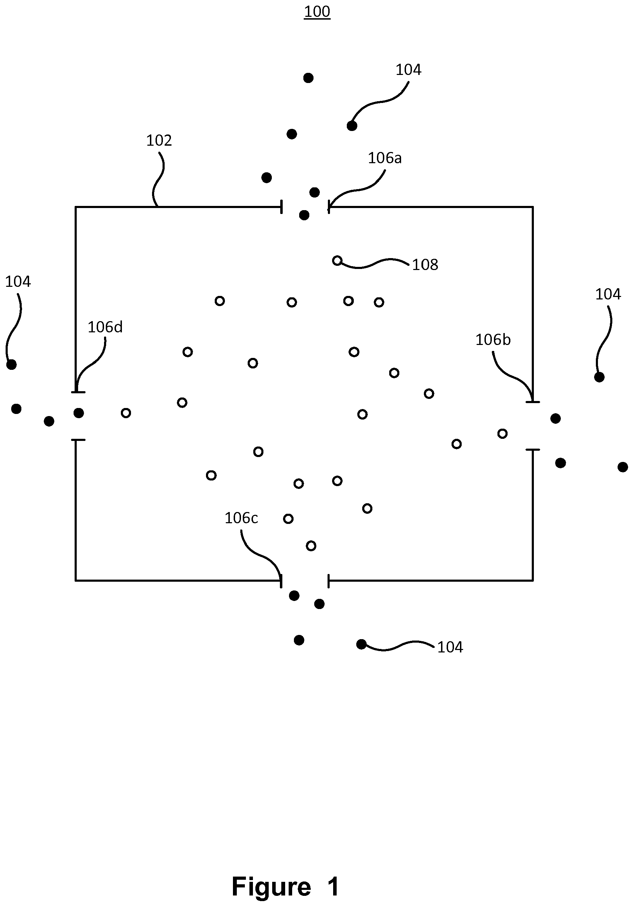

Figure 1 depicts an illustrative environment in which the cooperative localization can be used. The environment 100 comprises an indoor location 102. The indoor location 102 may comprise a public space such as a shopping mall, museum, building, etc. The cooperative localization described herein can be used to provide a location of users, or more particularly the portable electronic devices' of the users, within the public space 102. The user locations determined using the cooperative localization technique described herein can be used for various purposes, such as providing directions from a user's current location to a desired location within the public space 102. The location estimate may be further used to provide additional information to the user based on the location estimate such as information pertaining to a display of the user's estimated location, a map, directions, or to push or provide information relevant to the users location for example a special offer associated with a product sold at the estimated location of the user.

As depicted in Figure 1, a plurality of users 104 may be outside the indoor location 102. While outdoors, the users 104 may be able to receive a GPS signal and as such be able to determine the position of the user with a reasonably high degree of accuracy, represented graphically in Figure by the black circles. The users 104 may enter the indoor location 102 through one of a plurality of doors 106a, 106b, 106c, 106d. As depicted in Figure 1, once inside the indoor location 102, the users no longer receive the GPS signal and as such cannot use GPS to determine their location as represented by the white circles 108. As described further below, the location of the indoor users' 108 can be determined based on the location of adjacent users, or users within short-range communication range such as Bluetooth. As a user enters the indoor space 102, the user's portable electronic device can utilize inertial navigation to 'pull' the GPS location into the indoor space 102. That is, the inertial navigation of the portable electronic device can be used to extend the GPS location into the indoor space 102, providing known location information inside the indoor space 102. As more users enter the indoor space 102, the portable electronic devices can continue to use inertial navigation to further extend the range of known locations further into the indoor space 102. As more users enter the indoor location 102 it is possible to extend the known locations to cover a substantial portion of the indoor space 102 and provide a bubble of location information which improves as devices move in to the indoor space.

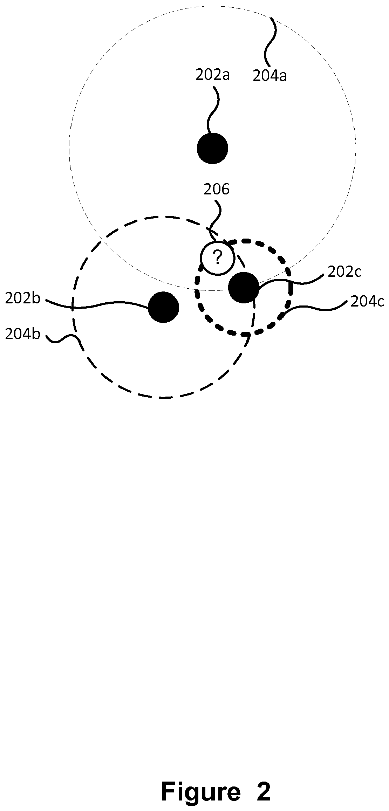

Figure 2 depicts an illustrative technique of determining a location of a portable electronic device based on a location of adjacent portable electronic devices. As depicted, there are a plurality of portable electronic devices 202a, 202b, 202c for which a location of the device, or an estimate for the location, is available. Each of the portable electronic devices 202a, 202b, 202c include a Bluetooth radio that transmits a Bluetooth signal 204a, 204b, 204c that can be received at the portable electronic device 206 for which the location is being estimated. As will be appreciated, the signal strength of the Bluetooth signals received at the portable electronic device 206 depends upon the distance to the other portable electronic devices 202a, 202b, 202c. The signal strength is represented graphically in Figure 2 using the width of the broken lines 204a, 204b, 204c, that is the thicker the line, the higher the received signal strength.

When determining the location of the portable electronic device 206, the locations of the other portable electronic devices 202a, 202b, 202c can be determined, for example using the Bluetooth radio identifier of the portable electronic devices, and the locations may be averaged together. Further, the strength of the received signals may be used to provide a weighting of each location. For example, the higher the received signal strength, the closer the portable electronic devices likely are, and as such, the location of the portable electronic device associated with the higher signal strength should receive a higher weighting.

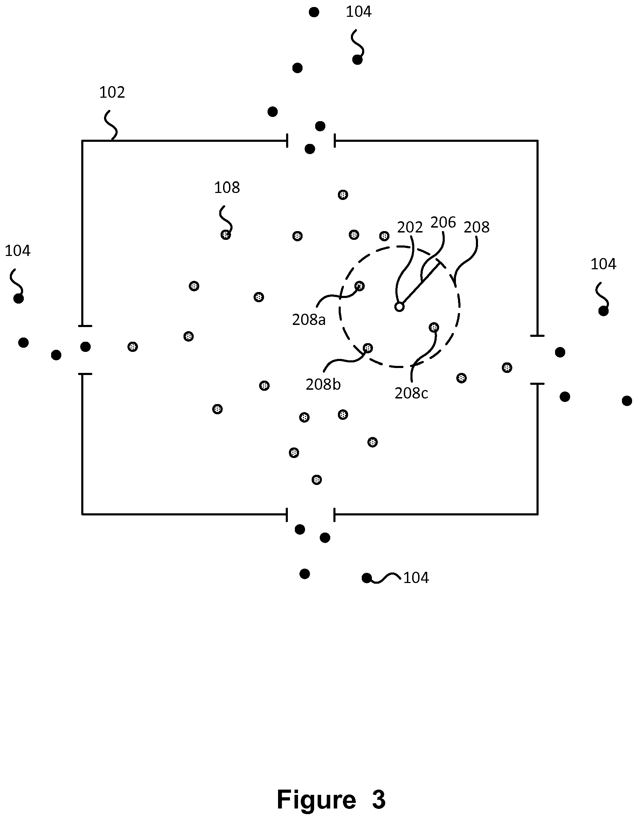

Figure 3 depicts an illustrative environment in which the cooperative localization can be used. The environment 300 is substantially similar to the environment 100 described with regards to Figure 1. However, the portable electronic devices 108 are associated with an estimate of the location of the portable electronic device, represented by the grey circles. As depicted, a plurality of the portable electronic devices 108 inside the indoor space 102 includes an estimate of the portable electronic device's location. A further portable electronic device 202 is inside the indoor space 102 and does not have an associated location, represented by the white circle. The portable electronic device 202 receives a plurality of Bluetooth signals from portable electronic devices 208a, 208b, 208c that are within Bluetooth communication range of the portable electronic device. As will be appreciated, Bluetooth radios typically have a communication range of approximately 10 meters, represented by the broken-line circle 206.

Once the location estimates of the surrounding portable electronic devices 208a, 208b, 208c are determined, the location estimate of the portable electronic device 202 can be determined. As described above with regards to Figure 2, the location of the portable electronic device 202 can be determined as a weighted average of the locations of portable electronic devices 208a, 208b, 208c. The weighting value can be based on the signal strength of the received Bluetooth signals. Once the location of the portable electronic device is estimated, it can be used to determine location estimates of other portable electronic devices inside the indoor space 102.

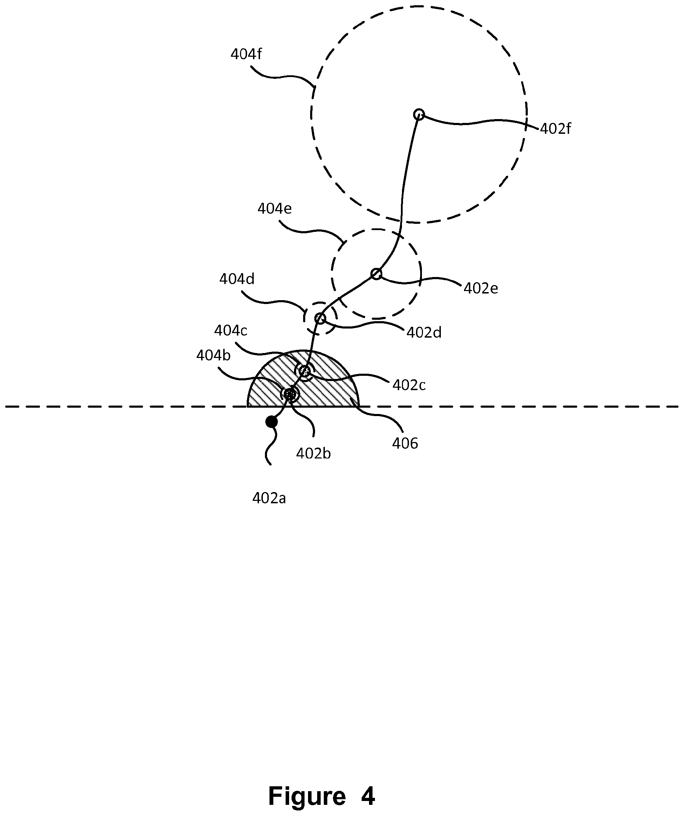

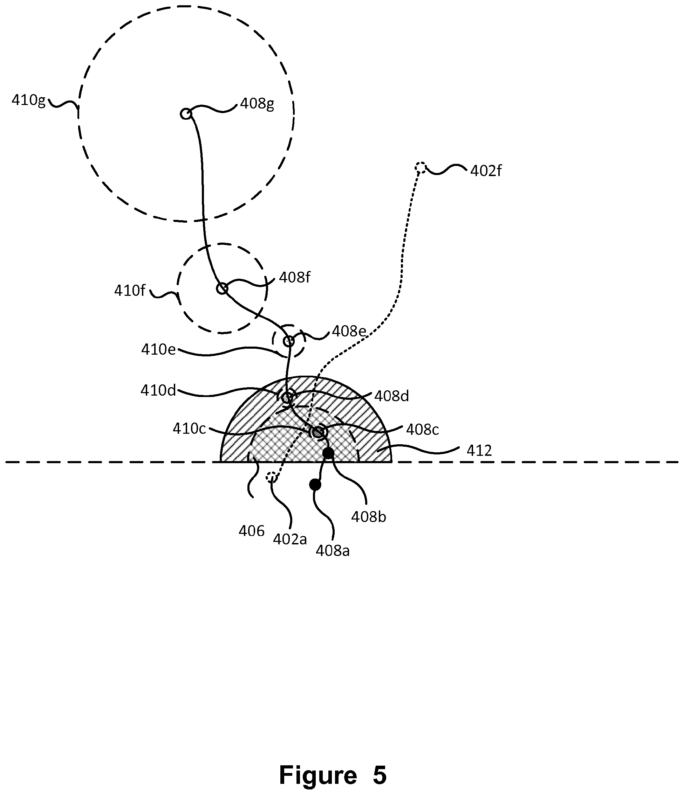

The cooperative localization technique described above requires that a location be associated with a plurality of portable electronic devices located within the indoor space 102. As previously described, the portable electronic devices are unable to determine their locations using GPS due to the poor reception of the GPS signal inside the indoor location 102. As such, it is necessary to provide a means for providing location information inside the indoor space 102. As described further below with regards to Figures 4 and 5, the portable electronic devices can utilize inertial navigation, based on accelerometers and gyroscopes of the portable electronic device, to determine the device location as the user enters the indoor location.

Figure 4 depicts an illustrative embodiment of extending location information inside of an indoor location. Figure 4 depicts a path of a user 402a, 402b, 402c, 402d, 402e, 402f as they enter the indoor space, such as the indoor space 102. As depicted, the location of the user, or more particularly the portable electronic device of the user, may be known to a high degree of accuracy, depicted graphically with the black circle, for example using GPS signals. As the user moves indoors, the portable electronic device loses the GPS reception and begins to use the inertial navigation of the device. As will be appreciated, the inertial navigation of the portable electronic device provides a dead reckoning of the movement of the portable electronic device. However, the error associated with the location estimate increases over time. The accuracy of the location estimate is depicted graphically with the darkness of the circle. The associated error of the location is further represented with the size of the dashed circles 404b, 404c, 404d, 404e, 404f.

As depicted, as the user enters the indoor location, the portable electronic device may use the inertial navigation to extend the location inside of the indoor space. As a result of the portable electronic device using the inertial navigation, the high accuracy of the location information can be extended inside the indoor location represented by the shaded semi-circle 406.

Figure 5 depicts the embodiment of Figure 4 when a further user enters the indoor space. As a new user enters the indoor location, the portable electronic device may use the GPS signals, as well as previously determined locations of portable electronic devices, to determine the location of the portable electronic device as it enters the indoor space. As depicted, the user moves from outdoors through the indoor space 408a, 408b, 408c, 408d, 408e, 408f, 408g. Again, the accuracy of the location estimate may decrease as the user moves inside the indoor space. The error associated with the location estimate is represented graphically in Figure 5 with the size of the broken-line circle 410c, 410d, 410e, 410f, 410g. As the user moves inside, the area associated with accurate location information is extended further inside the indoor space, as represented by the shaded semi-circle 412.

As will be appreciated, the technique for extending the location estimates into the indoor space described above with reference to Figures 4 and 5 are intended to be illustrative in nature. In order for the location estimates to be extended indoors, a number of users are required to be entering, exiting, or moving around within the indoor space. As more users are within the indoor space, the accuracy of the location estimates can be improved, and as such, the location information can eventually extend to cover the entire indoor space. As a result, the cooperative localization technique is particularly well suited to public spaces that have a large number of people within at any given time, such as malls, museums, or other buildings. From the above, as more users enter the indoor space, the location estimates will improve. As such, the cooperative localization technique has a convergence time that is dependent upon the arrival and departure rates of users.

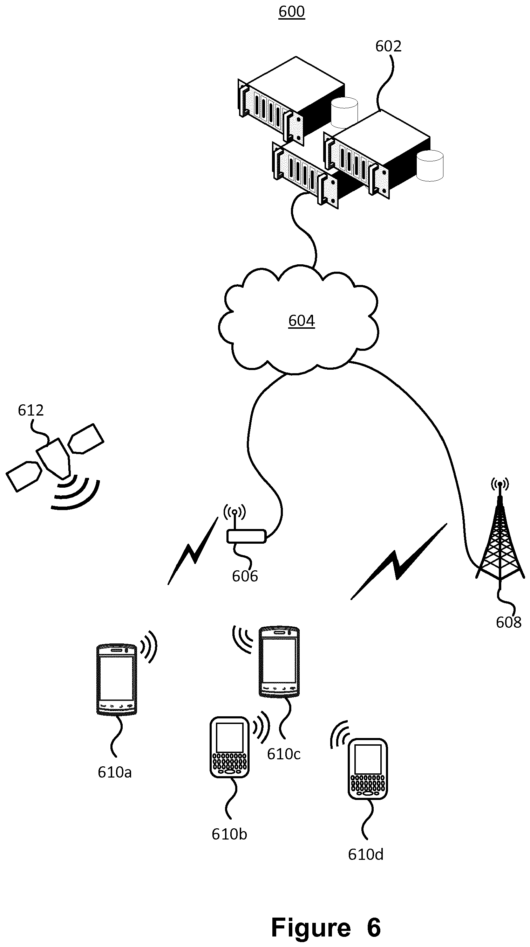

Figure 6 depicts an environment for determining a cooperative location estimate of portable electronic devices. The environment 600 includes one or more localization servers 602 connected to a network 604. The network 604 connects the servers 602 to a communication infrastructure, such as a Wi-Fi communication network 606 and/or a cellular or mobile wide area network communication infrastructure 608. The communication infrastructure is used to communicate wirelessly between the server 602 and one or more wireless devices 610a, 610b, 610c, 610d. The wireless devices 610a, 610b, 610c, 610d may include a GPS receiver for receiving GPS signals from a GPS system 612. The portable electronic devices 610a, 610b, 610c, 610d may further include an inertial navigation system for providing a dead reckoning of the movement of the portable electronic device from a known location.

The server 602 includes cooperative localization functionality for providing an estimate of the portable electronic devices using the Bluetooth radios that are visible from the portable electronic device. Each of the portable electronic devices sends location information to the server 602. Initially, when a device loses GPS reception, for example due to the device moving to an indoor space, the portable electronic device may extend the GPS location into the indoor space using inertial navigation. As the portable electronic device moves within the indoor space, the error associated with the location as determined from the inertial navigation system increases. The portable electronic device may communicate its estimated location, determined using the inertial navigation, to the server 602. The server 602 associates the locations received from portable electronic devices with a Bluetooth radio identifier of the portable electronic device. As a result, the server 602 builds a corpus of location information associated with Bluetooth radio identifiers.

Once the corpus of location information is built up, the location information stored at the server 602 may be used to provide location estimates to other portable electronic devices. A portable electronic device, for example query device 610a, can determine Bluetooth radio identifiers of one or more portable electronic devices, such as portable electronic devices 610b, 610c, 610d, within Bluetooth communication range of the portable electronic device and communicate the Bluetooth radio IDs to the server 602 in a location query message. The server 602 may receive the Bluetooth radio identifiers from the portable electronic device and determine locations associated with the Bluetooth radio identifiers. The server 602 may then determine an estimate of the location for the portable electronic device using the retrieved locations. The query message sent from the portable electronic device may include the Bluetooth radio ID of the portable electronic device and the server may update the corpus of location information to include the determined estimate of the location of the portable electronic device.

The portable electronic devices 610a, 610b, 610c, 610d can periodically send query messages to the server 602. For example, the portable electronic devices 610a, 610b, 610c, 610d can send location query messages every second. As such, the corpus of location information stored at the server 602 maintains current location estimates of the portable electronic devices that can be used to provide estimates of the locations for portable electronic devices.

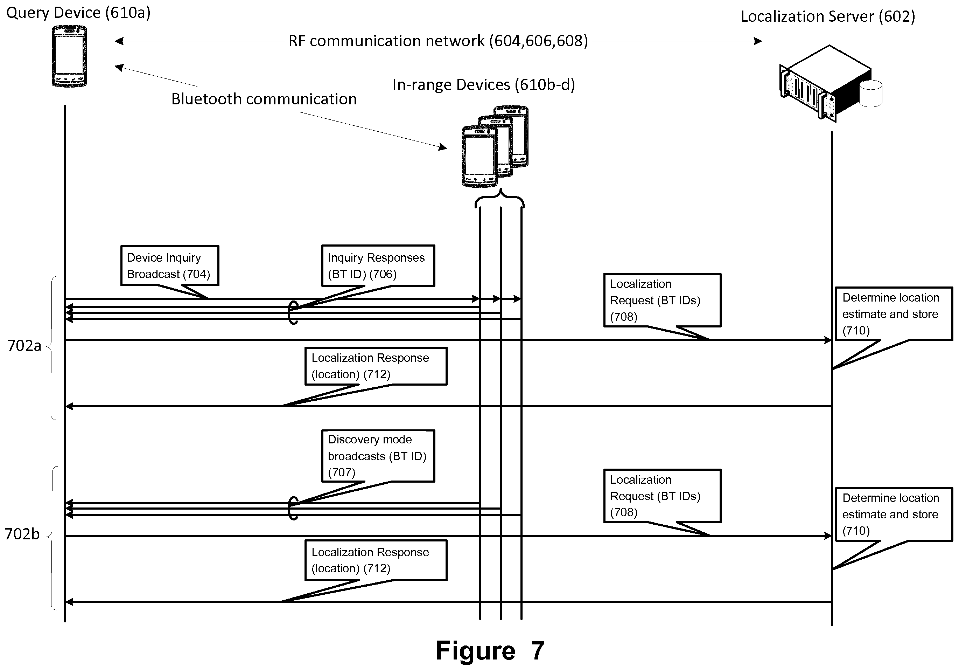

Figure 7 depicts a process of estimating a location of a portable electronic device. In Figure 7, it is assumed that the localization server 602 stores a corpus of location information determined for various portable electronic devices, or more particularly for Bluetooth radio IDs of the portable electronic devices. In Figure 7, it is further assumed that user device 610a is attempting to determine an estimate for its location. Further the corpus of location information stored at the server 602 includes location information associated with Bluetooth radio IDs of a plurality of portable electronic devices 610b, 610c, 610d that are in Bluetooth communication range with the query device 610a.

As depicted, the query device 610a repeatedly determines (702a, 702b) an estimate for the location. The process begins with the query device 610a broadcasting a Bluetooth Inquiry message (704). The Bluetooth Inquiry message (704) is received by the plurality of in-range portable electronic devices 610b-d that are within Bluetooth communication range of the query device 610a. When the Inquiry message is received at the portable electronic devices 610b-d, they send a response message back to the query device 610a (706). The response message includes the respective Bluetooth radio ID of the portable electronic devices 610b-d. The response messages are received at the query device 610a. The portable electronic device may determine a received signal strength associated with the received response messages. The query device 610a sends a localization request to the server 602 (708). The localization request may include the received Bluetooth IDs as well as the associated received signal strength indication associated with the Bluetooth IDs. The localization request may further include a Bluetooth ID of the query device 610a. The server 602 receives the localization request and determines the location estimate for the query device 610a and then stores the location estimate associated with the Bluetooth radio ID of the query portable electronic device (710). The server 602 sends the location estimate back to the query device 610a in a localization response message (712).

As depicted, the process of determining a location estimate (702a) may be periodically repeated by the portable electronic device (702b), however, in an alterative embodiment, the inquiry message (706) may not be generated by query device 610a, rather transmitter identifiers broadcast from "discoverable" in-range portable electronic devices 610b-d are received in a listening mode at the query device 610a. The broadcast messages may be generated by the in-range portable electronic device 610b-d during operation or configuration in a discoverable mode. The query device 610a will simply "see" in-range portable electronic devices 610b-d, assuming they are discoverable (707), and report the sighting of the transmitter IDs to the server 602 (708). Such discoverable portable electronic devices chirp their ID over the BT radio at frequent intervals (every few seconds) and this chirp can be heard by all nearby devices with their BT receivers turned ON. Thus inter-device communication is not a necessity to determine in-range device for localization.

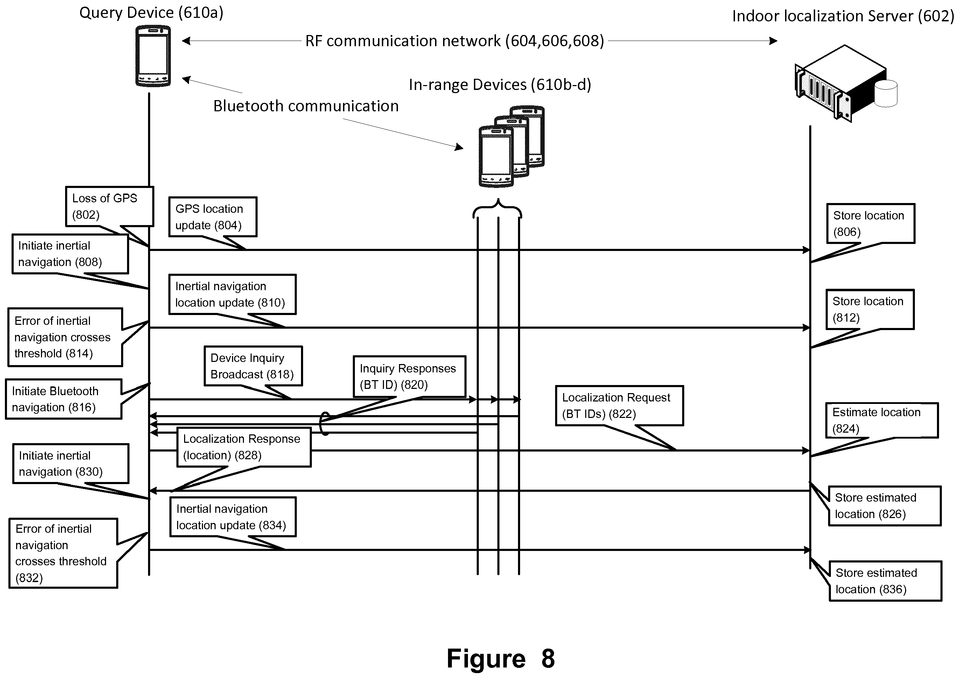

Figure 8 depicts a process of estimating a location of a portable electronic device. Figure 8 is similar to the process of Figure 7; however, the process of Figure 8 includes the ability to extend the location information determined using GPS with the use of the internal navigation system of portable electronic devices. As such, the process allows location information to be extended to within the indoor space, allowing location estimates for other portable electronic devices to be determined.

The process described with regards to Figure 8 begins when the portable electronic device, query device 610a, loses GPS signal reception (802). Upon losing GPS reception, the query device 610a may send the last location information to the server 602 (804), which stores the location with the Bluetooth radio ID (806). Once the query device 610a loses the GPS reception, the query device 610a initiates its inertial navigation system (808). The inertial navigation system of the query device 610a determines the dead reckoning of the portable electronic device. As the location is updated based on the inertial navigation system, the error associated with the determined location increases. At a certain point, the error of the inertial navigation crosses an error threshold (810). Once the location error crosses the error threshold, the query device 610a sends the location determined using the inertial navigation system to the server (812). The server 602a receives and stores the location information associated with the Bluetooth radio ID of the query device 610a (814). Once the error associated with the inertial navigation location crosses the error threshold, the query device 610a initiates the cooperative localization process (816). The cooperative localization process includes the query device 610a. The portable electronic device may broadcast a device Inquiry message (818) which is received with the other portable electronic devices 610b-d in Bluetooth communication range and sends the Bluetooth IDs of the portable electronic devices 610b-d back to the portable electronic devices 610a in Inquiry response messages (820). Alternatively, rather than sending the Inquiry message (818) the query device 610a may passively listen for broadcasts from other discoverable portable electronic devices 610b-d and not be required to communicate directly with the other portable electronic device 610b-d. The query device 610a sends the received Bluetooth radio IDs to the localization server 602 in a localization request message (822). The server 602 receives the localization request message and estimates the location of the query device 610a (824). The server 602 then stores the estimated location associated with the Bluetooth radio ID of the query device 610a (826) and returns the estimated location back to the query device 610a in a localization request message (828). Upon receiving the location estimation, the query device 610a may use the inertial navigation system to extend the location estimate (830) until an error of the inertial navigation location crosses the error threshold (832). Once the inertial navigation location crosses the error threshold, the query device 610a sends the location information to the server 602 (834). The server 602 receives the location information and stores the location (836) associated with the Bluetooth radio ID of the query device 610a.

The process described above with reference to Figure 8 may be used by a plurality of portable electronic devices 610a-d to extend location information from a high accuracy location, determined for example using GPS, into an area where the high accuracy location information is not available. Advantageously, the cooperative localization process can provide estimates of portable electronic devices in an indoor location, or in locations without GPS reception. The cooperative localization process does not require a large infrastructure to be installed within the indoor location in order to provide the location information, nor does it require any modification to the hardware of the portable electronic devices. As described above, the cooperative localization process uses short-range radio IDs, such as Bluetooth, associated with portable electronic devices that are in close proximity to the query portable electronic device to determine a location estimate. The radio IDs are provided to a server that stores current location estimates associated with radio IDs, which allows the server to estimate a location for the query portable electronic device.

Although the Bluetooth radio devices are described as being provided by portable electronic devices, it is contemplated that the location estimate may be improved in low traffic areas using one or more beacons. The beacons may be provided by one or more fixed Bluetooth radios at known locations. The server may treat the beacon location information in a similar manner to the locations associated with the portable electronic devices; however, as will be appreciated, the location information associated with the portable electronic devices may be periodically culled from the corpus, while the fixed locations of the beacons may be permanently stored in the corpus.

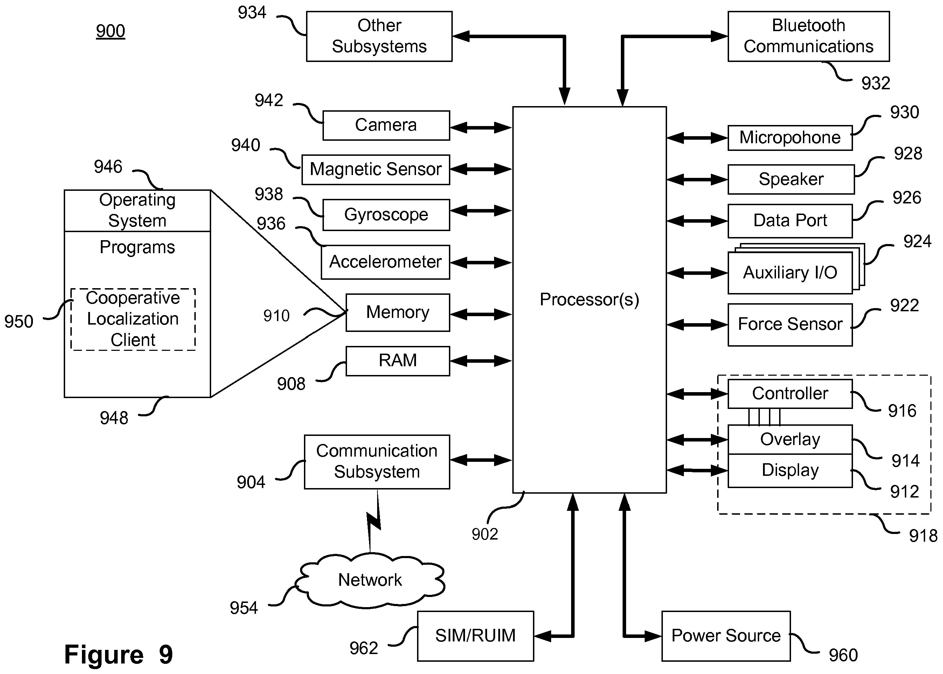

Figure 9 show a block diagram of a portable electronic device 900 in accordance with an illustrative embodiment. A processor 902, a multiple core processor or multiple processors may interface with components or modules of the portable electronic device to provide functionality required. A touch-sensitive interface is provided by a touch-sensitive display 918 coupled to the processor 902. The touch-sensitive display 918 may be any suitable touch-sensitive display, such as a capacitive, resistive, infrared, dispersive signal, acoustic pulse recognition, optical imaging, surface acoustic wave (SAW). In the presently described embodiment, the touch-sensitive display 918 is a capacitive touch-sensitive display which includes a capacitive touch-sensitive overlay 914, on a display 912 coupled to a controller 916. The overlay 914 may be an assembly of multiple layers in a stack which may include, for example, a substrate, a ground shield layer, a barrier layer, one or more capacitive touch sensor layers separated by a substrate or other barrier, and a cover.

The processor 902 and other components of the device are powered by a power source 960 and interfaces with memory 910 providing an operating system 946 and programs or applications 948 providing instructions for execution by the processor 902. Random access memory 908 is provided for the storage of the instructions and for processing data to be sent to or received from various components of the portable electronic device. The instructions when executed by the processor 902 may configure the portable electronic device to provide varying functionality for displaying data. The functionality may include functionality 950 for providing a cooperative localization client on the portable electronic device as described above. Although the functionality 950 is depicted as being separate from the operating system 946, it is contemplated that the functionality could be provided as component of the operating system.

Various input/out devices or sensors may be provided such as an accelerometer 936, light and/or gyroscope sensors 938, magnetic sensor 940 such as a Hall Effect sensor, and one or more cameras 942, a force sensor 922 as well as one or more auxiliary I/O devices 924. A communication subsystem 904 is provided for enabling data to be sent or received with a local area network 954 or wide area network utilizing different physical layer and access technology implementations. The communication subsystem may be utilized to request and pre-cache data based upon possible gesture event outcomes.

The device may include connections to other subsystems 934, including a subscriber identity module or removable user identity module 962 may be provided depending on the requirement of the particular network access technology to provide user access or identify information. Short-range communications, such as a Bluetooth radio, 932 may also be provided and may further include near-field communication (NFC), radio frequency identifier (RFID), ZigBee, IEEE 802.15 or other short-range communication technologies. The portable electronic device may also be provided with a data port 926 and auxiliary input/output interface for sending and receiving data. A microphone 930 and speaker 928 may also be provided to enable audio communications via the portable electronic device 900.

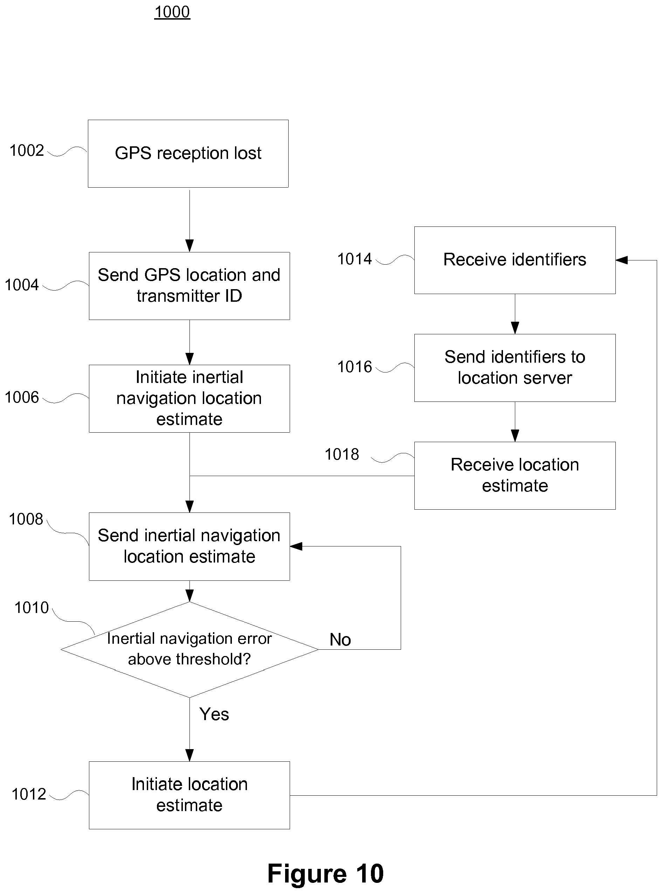

Figure 10 depicts a method of cooperative localization of a portable electronic device. The method 1000 begins when GPS reception is lost at the portable electronic device (1002). Once the GPS reception is lost, the portable electronic device sends its last location information to a localization server that stores location information associated with radio IDs (1004). The portable electronic device initiates an inertial navigation system (1006) that determines a dead reckoning of the position of the portable electronic device based on the last GPS location and sensors, such as accelerometers and gyroscopes of the portable electronic device. The portable electronic device periodically sends the inertial navigation location estimate to the cooperative localization server (1008) and then determines if the error associated with the inertial navigation location estimate is above a location error estimate (1010). If the error is not above a location error threshold (No at 1010) the portable electronic device may send an updated inertial navigation location estimate to the cooperative localization server after a short delay. If the error is above a location error threshold (Yes at 1010) the portable electronic device initiates Bluetooth location estimation functionality (1012). The portable electronic device receives device transmitter identifiers from portable electronic devices in communication range (1014). The broadcast information may be provided as part of a discoverable mode in which the portable electronic devices 610b-d broadcast discoverable messages containing their device identifier such as in a Bluetooth discoverable mode. Alternatively the query device 610a may send an inquiry message which is broadcast to nearby devices 610b-d which devices in turn respond with a message including the transmitter or radio ID of the responding portable electronic devices. Once the portable electronic device has received the identification messages, the query portable electronic device sends the Bluetooth identifiers to the cooperative localization server (1016). The cooperative localization server determines an estimate for the location of the query portable electronic device and sends the location estimate back to the query portable electronic device. The portable electronic device receives the location estimate (1018) which can then be used to provide location services. Once the location estimation is received (1018), the method may use the inertial navigation system to provide a dead reckoning of the location of the portable electronic device from the received estimate and sends the inertial navigation location estimate to the cooperative localization server (1008).

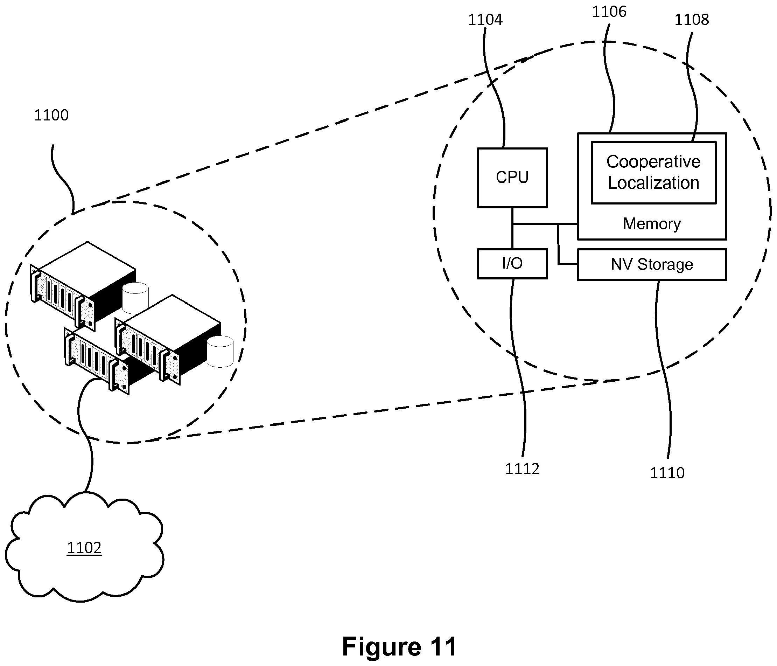

Figure 11 depicts components of a cooperative localization server. The cooperative localization server 1100 may be used as the cooperative localization server 602 described above. The localization server 1100 may comprise one or more physical servers that are coupled to a communication network 1102. The localization server 1100 may be provided by a plurality of physical servers, although conceptually, the server 1100 is comprised of a central processing unit (CPU) 1104 that is coupled to a memory 1106 storing instructions 1108 providing cooperative localization functionality 1108. The server 1100 may further comprise non-volatile storage 1110 and one or more input/output (I/O) components 1112.

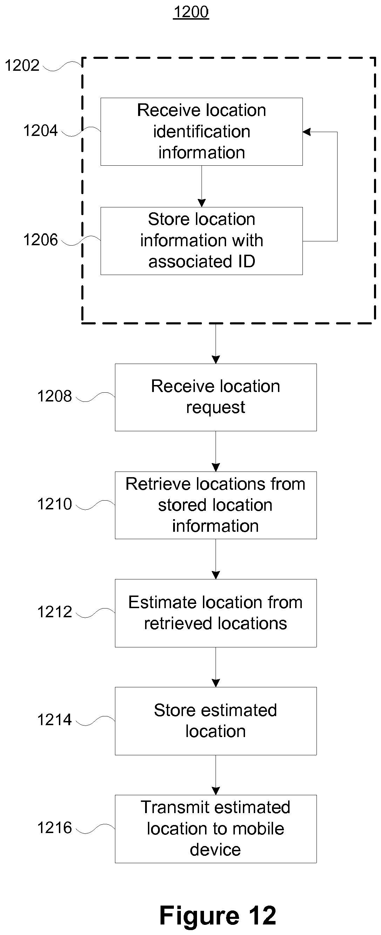

Figure 12 depicts a method of estimating a location of a portable electronic device using radio IDs. The method 1200 may be implemented in a server by the execution of instructions stored in memory. The method 1200 populates a corpus of location information associated with radio identifiers (1202). The population of the location corpus comprises receiving location information from a portable electronic device (1204). The location information may be determined by portable electronic devices in various ways, including, for example, using a GPS receiver, or using an inertial navigation system. The received location information includes a Bluetooth radio identifier of the portable electronic device associated with the location information. The server stores the location information, associating the location with the Bluetooth radio ID (1206).

In addition to receiving messages populating the corpus of location information, the server may receive a location request message from a portable electronic device (1208) that includes Bluetooth radio IDs of nearby devices. The locations associated with the received Bluetooth radio IDs are retrieved from the stored information in the corpus (1210) and used to provide an estimate of the location of the portable electronic device (1212). The location request message may include an indication of received signal strengths associated with each of the Bluetooth radio IDs, which can be used to provide a weighting of respective locations in estimating a location. Once the location is estimated and stored in the corpus (1214), it is transmitted to the portable electronic device (1216). When storing the estimated location in the corpus, the server may replace any location information associated with the Bluetooth radio ID of the query portable electronic device.

As described, above, the cooperative localization process can be used to provide location estimates of portable electronic devices in an indoor space. The cooperative localization process may utilize previously estimated locations associated with different portable electronic devices in estimating the location of the portable electronic device. As such, the cooperative localization server maintains a corpus of current location estimates of portable electronic devices associated with Bluetooth radio IDs. The cooperative localization process can be used in indoor spaces without requiring the installation and maintenance of a large number of location beacons. Although not required, it is contemplated that the cooperative localization technique may utilize fixed, or moving, beacons that can provide their location to a high degree of accuracy.

In some embodiments, any suitable computer readable media can be used for storing instructions for performing the methods described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

Although the description discloses example methods, system and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method of indoor cooperative localization of a query portable electronic device (610a), the method comprising:
receiving (1204) at a localization server (602) a plurality of location identification messages comprising inertial navigation locations determined from previously known GPS location, each providing a known location information of a respective portable electronic device (610a-d) and an associated Bluetooth or IEEE 802.15 transmitter identification (ID) of the respective portable electronic device (610a-d);
storing (1206) the received location information and the associated Bluetooth or IEEE 802.15 transmitter IDs at the localization server (602);
receiving (1208) at the localization server (602) a location request message providing one or more Bluetooth or IEEE 802.15 transmitter IDs of portable electronic devices (610b-d) in communication range with the query portable electronic device (610a) and a Bluetooth or IEEE 802.15 transmitter ID of the query portable electronic device (610a);
retrieving (1210) at the localization server (602) location information from the stored location information associated with the one or more Bluetooth or IEEE 802.15 transmitter IDs of the portable electronic devices (610b-d) received in the location request message;
estimating (1212) at the localization server (602) a location of the query portable electronic device (610a) based on the retrieved location information;
storing (1214) at the localization server (602) the estimated location of the query portable electronic device (610a) with the associated Bluetooth or IEEE 802.15 transmitter ID; and
transmitting (1216) from the localization server (602) the estimated location to the query portable electronic device (610a); and upon receiving the location estimation, the query portable electronic device (610a) using an inertial navigation system to extend the location estimate until an error threshold associated with the inertial navigation location is reached.

2. The method of claim 1 wherein the transmitter ID of each portable electronic device (610a-d) is associated with a short-range communication interface of the respective portable electronic device (610a-d).

3. The method of claim 2 wherein the short-range communication interface is a Bluetooth interface.

4. The method of claim 2 wherein the short-range communication interface is an IEEE 802.15 personal area network interface.

5. The method of any one of claims 1 to 4 wherein the location identification messages are received through a wireless communication network infrastructure.

6. The method of any one of claims 1 to 5 wherein estimating the location of the query portable electronic device (610a) comprises estimating the location as an average of the retrieved respective locations associated with the one or more transmitter ID(s) of the portable electronic devices (610b-d) in communication range with the query portable electronic device (610a).

7. The method of any one of claims 1 to 6 wherein the previously known location is determined at the one or more portable electronic devices (610a-d) using one or more of:
received GPS signals; and
a location estimated by cooperative localization.

8. The method of claim 7 further comprising:
at the one or more portable electronic devices (610a-d), estimating an error on the location of the one or more portable electronic devices (610a-d) determined using inertial navigation; and
when the error on the location of the query portable electronic device (610a) is above a threshold value, transmitting a location request message to the localization server (602).

9. The method of any one of claims 1 to 8 further comprising determining at the query portable electronic device (610a) the one or more transmitter ID(s) visible from the query portable electronic device (610a) by:
broadcasting an inquiry message; and
receiving at the query portable electronic device (610a) respective inquiry response messages including a transmitter ID from radios visible from the query portable electronic device (610a).

10. The method of any one of claims 1 to 8 further comprising determining at the query portable electronic device (610a) the one or more transmitter ID(s) visible from the query portable electronic device (610a) by receiving at the query portable electronic device (610a) transmitter ID(s) transmitted from in-range portable electronic devices (610b-d) at periodic intervals.

11. The method of any one of claims 1 to 10 wherein one or more of the transmitter ID(s) visible from the query portable electronic device (610a) comprise transmitter ID(s) of stationary transmitters having known locations.

12. The method of any one of claims 1 to 11 wherein the location request message is received from the query portable electronic device (610a) using a mobile wide area network infrastructure.

13. The method of any one of claims 1 to 12 further comprising using the estimated location within an indoor public space (102) to provide additional information to the query portable electronic device (610a).

14. The method of claim 13, wherein the additional information comprises one or more of:
directions to a point of interest relative to the estimated location;
information associated with the estimated location; and
a mapping data associated with the estimated location.

15. The method of any one of claims 1 to 14 further comprising periodically receiving the plurality of location identification messages (1204) at the localization server (602).

16. A computing device (602) for estimating a location of a portable electronic device (610a) comprising:
a processor (1104) for executing instructions; and
a memory for storing instructions, the instructions when executed by the processor (1106) configuring the computing device to perform the method of claims 1 to 15.

17. A computer readable memory containing instructions for indoor cooperative localization of a query portable electronic device (610a), the instructions which when executed by a processor perform the method of claims 1 to 15.

## Patentansprüche

1. Verfahren der kooperativen Indoor-Lokalisierung einer tragbaren elektronischen Abfragevorrichtung (610a), das Verfahren umfassend:
Empfangen (1204) mehrerer Standorterkennungsnachrichten an einem Lokalisierungsserver (602), die inertiale Navigationsstandorte umfassen, die aus einem zuvor bekannten GPS-Standort ermittelt werden, wobei diese jeweils Informationen zu einem bekannten Standort einer entsprechenden tragbaren elektronischen Einrichtung (610a-d) und eine zugehörige Bluetooth oder IEEE 802.15 Senderkennung (ID) der entsprechenden tragbaren elektronischen Vorrichtung (610a-d) bereitstellen;
Speichern (1206) der empfangenen Standortinformationen und der zugehörigen Bluetooth oder IEEE 802.15 Sender-IDs am Lokalisierungsserver (602);
Empfangen (1208) einer Standortanfrage-Nachricht am Lokalisierungsserver (602), die eine oder mehrere Bluetooth oder IEEE 802.15 Sender-IDs von tragbaren elektronischen Vorrichtungen (610b-d) in Kommunikationsreichweite zur tragbaren elektronischen Abfragevorrichtung (610a) und eine Bluetooth oder IEEE 802.15 Sender-ID der tragbaren elektronischen Abfragevorrichtung (610a) bereitstellt;
Einholen (1210) von Standortinformationen am Lokalisierungsserver (602) aus den gespeicherten Standortinformationen, die zu dem einen oder den mehreren Bluetooth oder IEEE 802.15 Sender-IDs der tragbaren elektronischen Vorrichtungen (610b-d) zugehören, die in der Standortanfragenachricht empfangen werden;
Schätzen (1212) eines Standorts der tragbaren elektronischen Abfragevorrichtung (610a) am Lokalisierungsserver (602) aufgrund der eingeholten Standortinformationen;
Speichern (1214) des geschätzten Standorts der tragbaren elektronischen Abfragevorrichtung (610a) am Lokalisierungsserver (602) mit der zugehörigen Bluetooth oder IEEE 802.15 Sender-ID; und
Senden (1216) des geschätzten Standorts vom Lokalisierungsserver (602) an die tragbare elektronische Abfragevorrichtung (610a); und nach Empfangen der Standortschätzung, Verwenden eines inertialen Navigationssystems durch die tragbare elektronische Abfragevorrichtung (610a), um die Standortschätzung auszuweiten, bis eine zum inertialen Navigationsstandort gehörende Fehlerschwelle erreicht ist.

2. Verfahren nach Anspruch 1, wobei die Sender-ID von jeder tragbaren elektronischen Vorrichtung (610a-d) zu einer Nahbereich-Kommunikationsschnittstelle der entsprechenden tragbaren elektronischen Vorrichtung (610a-d) gehört.

3. Verfahren nach Anspruch 2, wobei die Nahbereich-Kommunikationsschnittstelle eine Bluetooth-Schnittstelle ist.

4. Verfahren nach Anspruch 2, wobei die Nahbereich-Kommunikationsschnittstelle eine IEEE 802.15 Personal Area Network-Schnittstelle ist.

5. Verfahren nach einem der Ansprüche 1 bis 4, wobei die Standorterkennungsnachrichten über eine drahtlose Kommunikationsnetzwerk-Infrastruktur empfangen werden.

6. Verfahren nach einem der Ansprüche 1 bis 5 wobei das Schätzen des Standorts der tragbaren elektronischen Abfragevorrichtung (610a) das Schätzen des Standorts als einen Durchschnitt der eingeholten entsprechenden Standorte umfasst, die zu der einen oder den mehreren Sender-ID(s) der tragbaren elektronischen Vorrichtungen (610b-d) in Kommunikationsreichweite zur tragbaren elektronischen Abfragevorrichtung (610a) gehören.

7. Verfahren nach einem der Ansprüche 1 bis 6, wobei der zuvor bekannte Standort an einer oder mehreren tragbaren elektronischen Vorrichtungen (610a-d) ermittelt wird, unter Verwendung eines oder mehrerer aus:
empfangen Signalen; und
einem Standort, der durch kooperative Lokalisierung geschätzt wurde.

8. Verfahren nach Anspruch 7, ferner umfassend:
an der einen oder den mehreren tragbaren elektronischen Vorrichtung(en) (610a-d) Schätzen eines Fehlers des Standorts der einen oder mehreren tragbaren elektronischen Vorrichtung(en) (610a-d), der durch inertiale Navigation ermittelt wurde; und
wenn der Fehler bezüglich des Standorts der tragbaren elektronischen Abfragevorrichtung (610a) über einem Schwellenwert liegt, Senden einer
Standortanfragenachricht an den Lokalisierungsserver (602).

9. Verfahren nach einem der Ansprüche 1 bis 8, das ferner das Ermitteln der einen oder mehreren Sender-ID(s), die von der tragbaren elektronischen Abfragevorrichtung (610a) sichtbar sind, an der tragbaren elektronischen Abfragevorrichtung (610a) umfasst, durch:
Übertragen einer Nachfragenachricht; und
Empfangen entsprechender Nachfragenachrichten, die eine Sender-ID umfassen, von Funkgeräten, die von der tragbaren elektronischen Abfragevorrichtung (610a) sichtbar sind, an der tragbaren elektronischen Abfragevorrichtung (610a).

10. Verfahren nach einem der Ansprüche 1 bis 8, das ferner das Ermitteln der einen oder mehreren Sender-ID(s), die von der tragbaren elektronischen Abfragevorrichtung (610a) sichtbar sind, an der tragbaren elektronischen Abfragevorrichtung (610a) umfasst, indem an der tragbaren elektronischen Abfragevorrichtung (610a) Sender-IDs empfangen werden, die von tragbaren elektronischen Vorrichtungen in Reichweite (610b-d) in regelmäßigen Abständen gesendet werden.

11. Verfahren nach einem der Ansprüche 1 bis 10, wobei eine oder mehrere der Sender-ID(s), die vom tragbaren elektronischen Abfragevorrichtung (610a) sichtbar sind, Sender-ID(s) von feststehenden Sendern mit bekannten Standorten umfassen.

12. Verfahren nach einem der Ansprüche 1 bis 11, wobei die Standortanfragenachricht von der tragbaren elektronischen Abfragevorrichtung (610a) anhand einer mobilen Weitbereichsnetz-Infrastruktur empfangen wird.

13. Verfahren nach einem der Ansprüche 1 bis 12, das ferner das Verwenden eines geschätzten Standorts in einem öffentlichen Innenraum (102) umfasst, um der tragbaren elektronischen Abfragevorrichtung (610a) zusätzliche Informationen bereitzustellen.

14. Verfahren nach Anspruch 13, wobei die zusätzlichen Informationen eines oder mehrere der folgenden umfassen:
Weisung zu einem Punkt von Interesse in Bezug auf den geschätzten Standort;
Informationen, die zu dem geschätzten Standort gehören; und
Mappingdaten, die zu dem geschätzten Standort gehören.

15. Verfahren nach einem der Ansprüche 1 bis 14, das ferner das regelmäßige Empfangen der mehreren Standorterkennungsnachrichten (1204) am Lokalisierungsserver (602) umfasst.

16. Rechnereinrichtung (602) zum Schätzen des Standorts einer tragbaren elektronischen Vorrichtung (610a) umfassend:
einen Prozessor (1104) zum Ausführen von Anweisungen; und
einen Speicher zum Speichern von Anweisungen, wobei die Anweisungen beim Ausführen durch den Prozessor (1106) die Rechnereinrichtung zum Durchführen des Verfahrens nach Anspruch 1 bis 15 konfigurieren.

17. Computerlesbarer Speicher, der Anweisungen für kooperative Indoor-Lokalisierung einer tragbaren elektronischen Abfragevorrichtung (610a) enthält, wobei die Anweisungen beim Ausführen durch einen Prozessor das Verfahren nach Anspruch 1 bis 15 ausführen.

## Revendications

1. Procédé de localisation coopérative en intérieur d'un dispositif électronique portable d'interrogation (610a), le procédé comprenant :
recevoir (1204), au niveau d'un serveur de localisation (602), une pluralité de messages d'identification d'emplacement comprenant des emplacements de navigation par inertie déterminés à partir d'un emplacement GPS précédemment connu, chacun fournissant des informations d'emplacement connu d'un dispositif électronique portable (610a-d) respectif et une identification (ID) d'émetteur Bluetooth ou IEEE 802.15 associée du dispositif électronique portable (610a-d) respectif ;
stocker (1206) les informations d'emplacement reçues et les ID d'émetteur Bluetooth ou IEEE 802.15 associées au niveau du serveur de localisation (602) ;
recevoir (1208), au niveau du serveur de localisation (602), un message de requête d'emplacement fournissant une ou plusieurs ID d'émetteur Bluetooth ou IEEE 802.15 de dispositifs électroniques portables (610b-d) dans une plage de communication avec le dispositif électronique portable d'interrogation (610a) et une ID d'émetteur Bluetooth ou IEEE 802.15 du dispositif électronique portable d'interrogation (610a) ;
extraire (1210), au niveau du serveur de localisation (602), des informations d'emplacement à partir des informations d'emplacement stockées associées à la ou aux ID d'émetteur Bluetooth ou IEEE 802.15 des dispositifs électroniques portables (610b-d) reçues dans le message de requête d'emplacement ;
estimer (1212), au niveau du serveur de localisation (602), un emplacement du dispositif électronique portable d'interrogation (610a) sur la base des informations d'emplacement extraites ;
stocker (1214), au niveau du serveur de localisation (602), l'emplacement estimé du dispositif électronique portable d'interrogation (610a) avec l'ID d'émetteur Bluetooth ou IEEE 802.15 associée ; et
transmettre (1216), à partir du serveur de localisation (602), l'emplacement estimé au dispositif électronique portable d'interrogation (610a) ; et lors de la réception de l'estimation d'emplacement, utiliser, par le dispositif électronique portable d'interrogation (610a), un système de navigation par inertie pour étendre l'estimation d'emplacement jusqu'à ce qu'un seuil d'erreur associé à l'emplacement de navigation par inertie soit atteint.

2. Procédé selon la revendication 1, dans lequel l'ID d'émetteur de chaque dispositif électronique portable (610a-d) est associée à une interface de communication à courte portée du dispositif électronique portable (610a-d) respectif.

3. Procédé selon la revendication 2, dans lequel l'interface de communication à courte portée est une interface Bluetooth.

4. Procédé selon la revendication 2, dans lequel l'interface de communication à courte portée est une interface de réseau personnel IEEE 802.15.

5. Procédé selon l'une quelconque des revendications 1 à 4, dans lequel les messages d'identification d'emplacement sont reçus par l'intermédiaire d'une infrastructure de réseau de communication sans fil.

6. Procédé selon l'une quelconque des revendications 1 à 5, dans lequel l'estimation de l'emplacement du dispositif électronique portable d'interrogation (610a) comprend l'estimation de l'emplacement en tant que moyenne des emplacements respectifs extraits associés à la ou aux ID d'émetteur des dispositifs électroniques portables (610b-d) dans une plage de communication avec le dispositif électronique portable d'interrogation (610a).

7. Procédé selon l'une quelconque des revendications 1 à 6, dans lequel l'emplacement précédemment connu est déterminé au niveau du ou des dispositifs électroniques portables (610a-d) à l'aide d'un ou plusieurs éléments parmi :
des signaux GPS reçus ; et
un emplacement estimé par une localisation coopérative.

8. Procédé selon la revendication 7, comprenant en outre :
au niveau du ou des dispositifs électroniques portables (610a-d), estimer une erreur sur l'emplacement du ou des dispositifs électroniques portables (610a-d) déterminé à l'aide d'une navigation par inertie ; et
lorsque l'erreur sur l'emplacement du dispositif électronique portable d'interrogation (610a) est au-dessus d'une valeur de seuil, transmettre un message de requête d'emplacement au serveur de localisation (602).

9. Procédé selon l'une quelconque des revendications 1 à 8, comprenant en outre la détermination, au niveau du dispositif électronique portable d'interrogation (610a), de la ou des ID d'émetteur visibles depuis le dispositif électronique portable d'interrogation (610a) par :
diffusion d'un message d'interrogation ; et
réception, au niveau du dispositif électronique portable d'interrogation (610a), de messages de réponse d'interrogation respectifs comprenant une ID d'émetteur à partir de radios visibles depuis le dispositif électronique portable d'interrogation (610a).

10. Procédé selon l'une quelconque des revendications 1 à 8, comprenant en outre la détermination, au niveau du dispositif électronique portable d'interrogation (610a), de la ou des ID d'émetteur visibles depuis le dispositif électronique portable d'interrogation (610a) par réception, au niveau du dispositif électronique portable d'interrogation (610a), d'une ou plusieurs ID d'émetteur transmises à partir de dispositifs électroniques portables dans la plage (610b-d) à des intervalles périodiques.

11. Procédé selon l'une quelconque des revendications 1 à 10, dans lequel une ou plusieurs de la ou des ID d'émetteur visibles depuis le dispositif électronique portable d'interrogation (610a) comprennent une ou plusieurs ID d'émetteur d'émetteurs immobiles ayant des emplacements connus.

12. Procédé selon l'une quelconque des revendications 1 à 11, dans lequel le message de requête d'emplacement est reçu à partir du dispositif électronique portable d'interrogation (610a) à l'aide d'une infrastructure de réseau étendu mobile.

13. Procédé selon l'une quelconque des revendications 1 à 12, comprenant en outre l'utilisation de l'emplacement estimé dans un espace public en intérieur (102) pour fournir des informations supplémentaires au dispositif électronique portable d'interrogation (610a).

14. Procédé selon la revendication 13, dans lequel les informations supplémentaires comprennent un ou plusieurs éléments parmi :
des directions vers un point d'intérêt par rapport à l'emplacement estimé ;
des informations associées à l'emplacement estimé ; et
des données de mappage associées à l'emplacement estimé.

15. Procédé selon l'une quelconque des revendications 1 à 14, comprenant en outre la réception périodique de la pluralité de messages d'identification d'emplacement (1204) au niveau du serveur de localisation (602).

16. Dispositif informatique (602) pour estimer un emplacement d'un dispositif électronique portable (610a) comprenant :
un processeur (1104) pour exécuter des instructions ; et
une mémoire pour stocker des instructions, les instructions, lorsqu'elles sont exécutées par le processeur (1106), configurant le dispositif informatique pour réaliser le procédé selon les revendications 1 à 15.

17. Mémoire lisible par ordinateur contenant des instructions pour une localisation coopérative en intérieur d'un dispositif électronique portable d'interrogation (610a), les instructions, lorsqu'elles sont exécutées par un processeur, réalisant le procédé selon les revendications 1 à 15.
